# EUROPEAN PATENT APPLICATION

(11) **EP 4 656 421 A1**
(43) Date of publication of application: **03.12.2025**
(21) Application number: 24178482.6
(22) Date of filing: 28.05.2024
(51) Int. Cl.: B60H 1/00, B60H 1/32

(54) **THERMAL MANAGEMENT SYSTEM**

(71) Applicant: VOLVO TRUCK CORPORATION, 405 08 Göteborg (SE)
(72) Inventor: JOVET, Bastien, 73210 PEISEY-NANCROIX (FR)
(74) Representative: Germain Maureau

(57) **Abstract**

A thermal management system (10) including a first temperature regulation circuit (100), a second temperature regulation circuit (200), and a controller (50), wherein the first temperature regulation circuit is configured to circulate a fluid through a plurality of heat exchangers (140, 150, 160, 170), a first temperature regulation location (20), and a second temperature regulation location (30), the second temperature regulation circuit is configured to circulate a fluid through a plurality of heat exchangers (140, 150, 240) and a compressor (220), and the controller is configured to convert one or more of the first temperature regulation circuit to a first temperature regulation sub-circuit and the second temperature regulation circuit to a second temperature regulation sub-circuit to direct the flow of one or more of the fluids through one or more of the first temperature regulation circuit and the second temperature regulation circuit.

## Description

### TECHNICAL FIELD

The disclosure relates generally to a thermal management system configured for use on a vehicle. In aspects, the disclosure relates to a thermal management system configured for use on a vehicle to regulate a temperature of one or more of an energy storage system of a vehicle, an electric power unit of a vehicle, and a passenger compartment of a vehicle. The disclosure may relate to heavy-duty vehicles, such as trucks, buses, and/or construction equipment, among other vehicle types. However, although the disclosure may be described with respect to a particular vehicle, the disclosure is not restricted to any particular vehicle.

### BACKGROUND

An energy storage system, such as a system including a battery assembly, and an electric power unit, such as a unit including power electronics implemented to supply power to powertrain components and auxiliary components of a battery electric vehicle, a fuel cell electric vehicle, and/or an internal combustion engine vehicle, require temperature regulation to optimize performance, longevity, and safety corresponding to the components. Further, a passenger compartment, such as a space designated for a user of a vehicle, requires temperature regulation to ensure comfortability of the passenger compartment, thereby benefitting the physical and mental health of the user of the vehicle.

Currently available systems directed to temperature management of energy storage systems, electric power units, and/or passenger compartments of a vehicle typically include numerous complex thermal loops and components, which increases energy consumption, impact on driving range, and costs associated with manufacture and maintenance of a vehicle.

It is desirable to provide a thermal management system and method configured for use on a vehicle that are capable of dynamically regulating a temperature of one or more of an energy storage system of a vehicle, an electric power unit of a vehicle, and a passenger compartment of a vehicle, in a manner that simplifies and reduces a number of thermal loops and components utilized to regulate a temperature of one or more of the energy storage system, the electric power unit, and the passenger compartment.

### SUMMARY

According to aspects of the disclosure, a thermal management system configured for use on a vehicle is provided. The thermal management system is configured to regulate a temperature of one or more temperature regulation location on a vehicle. The thermal management system includes a first temperature regulation circuit configured to transfer heat within the thermal management system. The first temperature regulation circuit is configured to circulate a flow of a first working fluid. The thermal management system includes a second temperature regulation circuit configured to transfer heat within the thermal management system. The second temperature regulation circuit is configured to circulate a flow of a second working fluid. The thermal management system includes a controller configured to operate the first temperature regulation circuit to direct the flow of the first working fluid and the second temperature regulation circuit to direct the flow of the second working fluid. The first temperature regulation circuit is configured to circulate the first working fluid through a first heat exchanger configured to transfer heat between the first working fluid and the second working fluid, a second heat exchanger configured to transfer heat between the first working fluid and the second working fluid, a third heat exchanger configured to transfer heat between the first working fluid and an internal environment of a vehicle, a fourth heat exchanger configured to transfer heat between the first working fluid and an external environment of a vehicle, a first temperature regulation location of a vehicle, and a second temperature regulation location of a vehicle. The second temperature regulation circuit is configured to circulate the second working fluid through the first heat exchanger, the second heat exchanger, a compressor, and an evaporator. The controller is configured to convert one or more of the first temperature regulation circuit to a first temperature regulation sub-circuit and the second temperature regulation circuit to a second temperature regulation sub-circuit to direct the flow of one or more of the first working fluid through the first temperature regulation circuit and the second working fluid through the second temperature regulation circuit.

According to aspects of the disclosure, the first temperature regulation circuit may include a first connection line, a second connection line, a third connection line, a fourth connection line, a fifth connection line, and a sixth connection line, and the first heat exchanger may be arranged on the first connection line, the second heat exchanger may be arranged on the second connection line, the third heat exchanger may be arranged on the third connection line, the fourth heat exchanger may be arranged on the fourth connection line, the first temperature regulation location may be arranged on the fifth connection line, and the second temperature regulation location may be arranged on the sixth connection line.

According to aspects of the disclosure, the first connection line, the second connection line, the third connection line, the fourth connection line, the fifth connection line, and the sixth connection line of the first temperature regulation circuit may be arranged in parallel.

According to aspects of the disclosure, the second temperature regulation circuit may include a first connection line, a second connection line, and a third connection line, and the first heat exchanger may be arranged on the first connection line, the second heat exchanger may be arranged on the second connection line, and the evaporator may be arranged on the third connection line.

According to aspects of the disclosure, the first connection line, the second connection line, and the third connection line of the second temperature regulation circuit may be arranged in parallel.

According to aspects of the disclosure, the first temperature regulation circuit may include one or more valve member configured to transition between a partially open position, an open position, and a closed position to direct the flow of the first working fluid through the first temperature regulation circuit.

According to aspects of the disclosure, the first temperature regulation circuit may include a first valve member arranged in communication with the first connection line and a second valve member arranged in communication with the second connection line.

According to aspects of the disclosure, the first temperature regulation circuit may include a first valve member arranged in communication with the fifth connection line and a second valve member arranged in communication with the sixth connection line.

According to aspects of the disclosure, the first valve member and the second valve member may be arranged in parallel.

According to aspects of the disclosure, the first valve member and the second valve member may each include a three-way valve.

According to aspects of the disclosure, the first temperature regulation circuit may be configured to circulate the first working fluid through one or more pump member configured to increase or decrease a flow rate of the first working fluid.

According to aspects of the disclosure, the first temperature regulation circuit may include a first pump arranged in communication with the first connection line.

According to aspects of the disclosure, the first temperature regulation circuit may include a second pump arranged in communication with the second connection line.

According to aspects of the disclosure, the first pump and the second pump may be arranged in parallel.

According to aspects of the disclosure, the temperature regulation location may correspond to one or more of an energy storage system of a vehicle, an electric power unit of a vehicle, and a passenger compartment of a vehicle.

According to aspects of the disclosure, the first working fluid may be a coolant.

According to aspects of the disclosure, the second working fluid may be a refrigerant.

According to aspects of the disclosure, a vehicle configured to regulate a temperature of one or more temperature regulation location is provided. The vehicle includes an energy storage system, an electric power unit, a passenger compartment, and the thermal management system according any aspect of the disclosure presented herein.

According to aspects of the disclosure, a method of regulating a temperature of one or more temperature regulation location on a vehicle is provided. The method includes providing the thermal management system according to any aspect of the disclosure presented herein and operating the controller to convert one or more of the first temperature regulation circuit to a first temperature regulation sub-circuit and the second temperature regulation circuit to a second temperature regulation sub-circuit to direct the flow of one or more of the first working fluid through the first temperature regulation circuit and the second working fluid through the second temperature regulation circuit.

According to aspects of the disclosure, one or more of the first temperature regulation sub-circuit and the second temperature regulation sub-circuit may correspond to one or more mode of operation of the thermal management system.

In the manner described and according to aspects illustrated herein, the thermal management system and the method of regulating a temperature of one or more temperature regulation location on a vehicle are capable of dynamically regulating a temperature of one or more of an energy storage system of a vehicle, an electric power unit of a vehicle, and a passenger compartment of a vehicle, in a manner that simplifies and reduces a number of thermal loops and components utilized to regulate a temperature of one or more of the energy storage system, the electric power unit, and the passenger compartment.

The disclosed aspects, examples (including any preferred examples), and/or accompanying claims may be suitably combined with each other as would be apparent to a person having ordinary skill in the art. Additional features and advantages are disclosed in the following description, claims, and drawings, and in part will be readily apparent therefrom to persons skilled in the art and/or recognized by practicing the disclosure as described herein.

### BRIEF DESCRIPTION OF THE DRAWINGS

Aspects of the disclosure will be described with reference to the drawings, where like numerals reflect like elements:
**FIG. 1** shows a vehicle including a thermal management system according to aspects of the disclosure;
**FIG. 2** shows a schematic representation of an electronic control unit, an energy storage system, an electronic power unit, and a passenger compartment of the vehicle of **FIG. 1** according to aspects of the disclosure;
**FIG. 3** shows a schematic representation of the thermal management system according to aspects of the disclosure;
**FIG. 4** shows a schematic representation of an alternative arrangement of the thermal management system according to **FIG. 3** according to aspects of the disclosure;
**FIG. 5** shows a schematic representation of the thermal management system according to **FIG. 3**, depicting operation of the thermal management system in a first mode according to aspects of the disclosure;
**FIG. 6** shows a schematic representation of the thermal management system according to **FIG. 3****,** depicting operation of the thermal management system in a second mode according to aspects of the disclosure;
**FIG. 7** shows a schematic representation of the thermal management system according to **FIG. 3**, depicting operation of the thermal management system in a third mode according to aspects of the disclosure;
**FIG. 8** shows a schematic representation of the thermal management system according to **FIG. 3**, depicting operation of the thermal management system in a fourth mode according to aspects of the disclosure;
**FIG. 9** shows a schematic representation of the thermal management system according to **FIG. 3**, depicting operation of the thermal management system in a fifth mode according to aspects of the disclosure; and
**FIG. 10** shows a schematic representation of the thermal management system according to **FIG. 3**, depicting operation of the thermal management system in a sixth mode according to aspects of the disclosure;

### DETAILED DESCRIPTION

The detailed description set forth below provides information and examples with sufficient detail to enable those skilled in the art to practice the disclosure.

In the description, like numerals represent like parts. Although the technology disclosed herein is described with reference to specific examples, it should be understood that modifications and changes may be made to these examples without going beyond the general scope as defined by the claims. In particular, individual characteristics of the various examples shown and/or mentioned herein may be combined in additional examples. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular example(s) described. On the contrary, the intention of this disclosure is to cover all modifications, equivalents, and alternatives falling within the scope of the disclosure.

Various materials, methods of construction and methods of fastening will be discussed in the context of the disclosed example(s). Those skilled in the art will recognize known substitutes for the materials, construction methods, and fastening methods, all of which are contemplated as compatible with the disclosed example(s) and are intended to be encompassed by the appended claims.

As used in this disclosure and the appended claims, the singular forms "a," "an," and "the" include plural referents unless the content clearly dictates otherwise. As used in this disclosure and the appended claims, the term "or" is generally employed in its sense including "and/or" unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like fashion (e.g., "between" versus "directly between," "adjacent" versus "directly adjacent," etc.).

Spatially relative terms, such as "top," "bottom," "middle," "inner," "outer," "beneath," "below," "lower," "above," "upper," and the like, may be used herein for ease of description to describe one element or feature's relationship to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below," or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," "third," etc. may be used herein to describe various elements, components, regions, layers, sections, and/or parameters, these elements, components, regions, layers, sections, and/or parameters should not be limited by these terms. These terms are only used to distinguish one element, component, region, layer, or section from another region, layer, or section. Thus, a first element, component, region, layer, or section discussed herein could be termed a second element, component, region, layer, or section without departing from the teachings of the present disclosure.

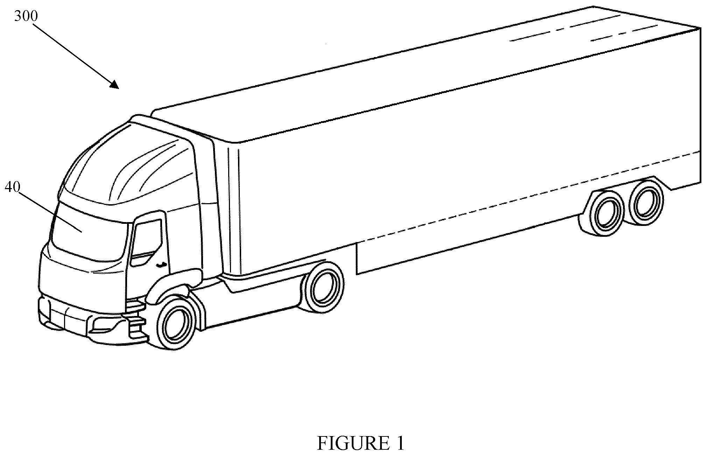

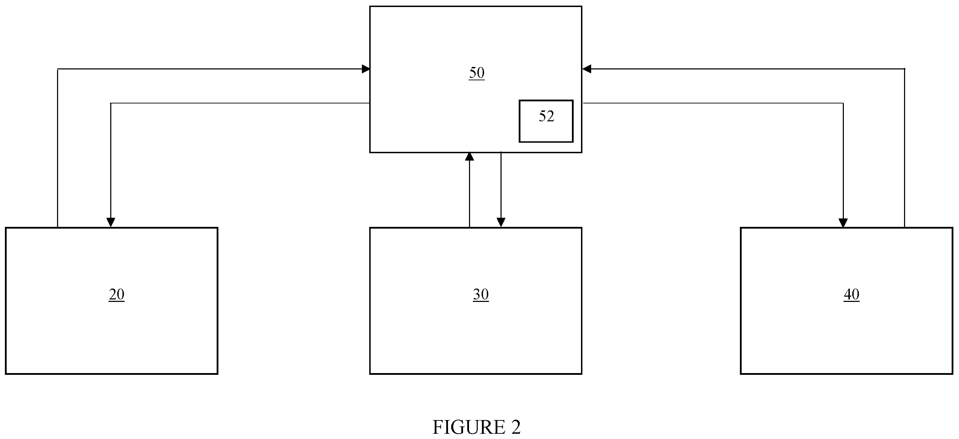

**FIGS. 1-3** show a temperature management system 10 (hereafter, "the system 10") configured for use on a vehicle 300 (see **FIG. 1**). It is contemplated that the vehicle 300 may be a heavy-duty vehicle, such as a truck, bus, and/or construction equipment. However, it should be understood that the system 10 may be configured for use on other types of vehicles. It is contemplated that the system 10 may be configured for use on a battery electric vehicle, a fuel cell electric vehicle, and/or an internal combustion engine vehicle. However, reference to a battery electric vehicle will be used for purposes of the description, unless reference to a fuel cell electric vehicle and/or an internal combustion engine vehicle is otherwise necessary.

Referring to **FIGS. 1-3**, the vehicle 300 to which the system 10 is configured for use on includes an energy storage system (hereafter, the "ESS") 20. Additionally or alternatively, it is contemplated that the ESS 20 may be part of the system 10. The ESS 20 includes one or more battery pack assembly 22a, 22b configured to store rechargeable energy. In examples, the ESS 20 may include at least a first battery pack assembly 22a and a second battery pack assembly 22b. However, the first battery pack assembly 22a and the second battery pack assembly 22b will be referred to herein collectively as the "ESS 20," unless individual reference to each battery pack assembly 22a, 22b is otherwise necessary.

The vehicle 300 to which the system 10 is configured for use on includes an electric power unit (hereafter, the "EPU 30") 30. Additionally or alternatively, it is contemplated that the EPU 30 may be part of the system 10. The EPU 30 includes power electronic devices (not shown) implemented to supply power to power train components (not shown) and auxiliary components (not shown) of the vehicle 300. It is contemplated that the power electronics may include one or more of an electric motor, a transmission, an auxiliary battery, a rectifier, an inverter, a converter, and/or the like. In examples, one or more of the power electronic devices and the auxiliary components may be arranged serially and/or in parallel based upon a corresponding temperature requirement of one or more of the power electronic devices and the auxiliary components.

Referring to **FIGS. 1-2****,** the vehicle 300 to which the system 10 is configured for use on includes a passenger compartment 40. The passenger compartment 40 includes a space designated for one or more user of the vehicle 300. It is contemplated that the passenger compartment 40 may include one or more of a dashboard, a heating and cooling control interface, a seating arrangement, a steering wheel, airbags, and/or the like.

Each of the ESS 20 and the EPU 30 generate heat during operation and/or perform optimally within specific temperature ranges. As such, temperature regulation of the ESS 20 and the EPU 30 is required to optimize performance, longevity, and safety corresponding to the ESS 20 and the EPU 30. Additionally, the passenger compartment 40 gains and loses heat due at least in part to the surrounding environment of the vehicle 300. To this end, temperature regulation of the passenger compartment 40 is required to ensure comfortability of a user of the vehicle 300, thereby benefitting the physical and mental health of the user of the vehicle 300.

It is contemplated that the ESS 20 may be referred to herein as a "first temperature regulation location," that the EPU 30 may be referred to herein as a "second temperature regulation location," and that the passenger compartment 40 may be referred to herein as a "third temperature regulation location." Additionally or alternatively, it is contemplated that the ESS 20, the EPU 30, and the passenger compartment 40 may be referred to herein collectively as the "temperature regulation location," unless individual reference to one or more of the first temperature regulation location 20, the second temperature regulation 30, and the third temperature regulation location 40 is otherwise necessary.

Referring to **FIGS. 1-2**, the vehicle 300 to which the system 10 is configured for use on includes an electronic control unit (hereafter, the "ECU" or the "control unit") 50 configured to control operation of the system 10. Additionally or alternatively, it is contemplated that the ECU 50 may be part of the system 10. The ECU 50 may be configured to receive operational data from the system 10. Additionally or alternatively, the ECU 50 may be configured to receive operational data from one or more of the ESS 20, the EPU 30, and the passenger compartment 40. In examples, the ECU 50 may be configured to receive data from and/or operate one or more sensor 52 configured to detect a temperature of one or more of the ESS 20, the EPU 30, and the passenger compartment 40. Additionally or alternatively, the one or more sensor 52 may be configured to detect a temperature corresponding a flow of one or more fluid though the system 10. It is contemplated that the sensor 52 may be considered part of and/or configured to function with control systems of the vehicle 300. Additionally or alternatively, the sensor 52 may be considered part of and/or configured to function with the system 10.

Data corresponding to a detection of a temperature of one or more of the ESS 20, the EPU 30, and the passenger compartment 40, which is detected by the sensor 52, may be sent to the ECU 50 and, based upon the data corresponding to the detection of a temperature of one or more of the ESS 20, the EPU 30, and the passenger compartment 40, the ECU 50 may be configured to control operation of the system 10. In examples, if the detection of a temperature of one or more of the ESS 20, the EPU 30, and the passenger compartment 40 is above one or more first predetermined temperature threshold, the ECU 50 may be configured to operate the system 10 to decrease a temperature of one or more of the ESS 20, the EPU 30, and the passenger compartment 40. If the detection of a temperature of one or more of the ESS 20, the EPU 30, and the passenger compartment 40 is below one or more second predetermined temperature threshold, the ECU 50 may be configured to operate the system to increase a temperature of one or more of the ESS 20, the EPU 30, and the passenger compartment 40.

It is contemplated that the first predetermined temperature threshold; the second predetermined temperature threshold; the decrease in temperature of one or more of the ESS 20, the EPU 30, and the passenger compartment 40; and the increase in temperature of one or more of the ESS 20, the EPU 30, and the passenger compartment 40 may be adjusted by the ECU 50 to optimize the system 10. It is contemplated that the ECU 50 may utilize historical data, an algorithm, and/or machine learning to perform such an adjustment to optimize the system 10. Additionally or alternatively, it is contemplated that the ECU 50 and, thus, the system 10, may be controlled manually by a user via one or more user interface (not shown) configured to receive input from the user.

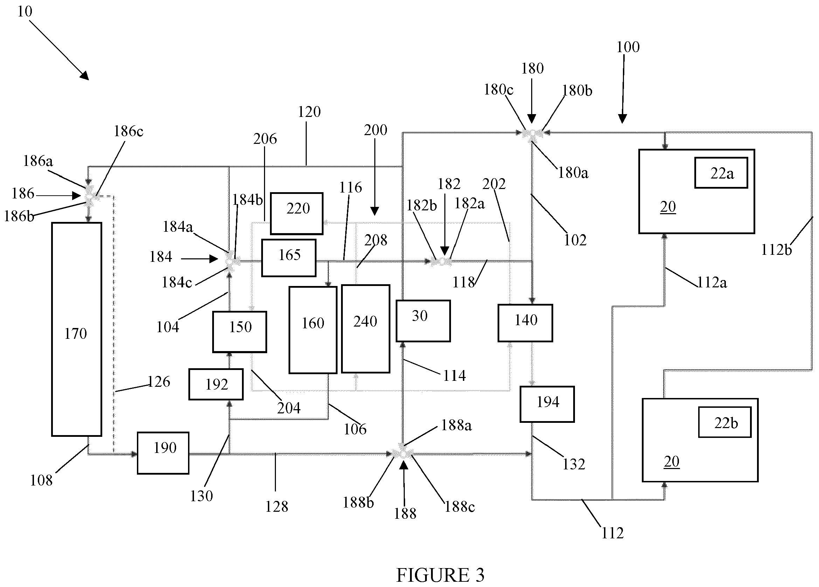

As shown by **FIG. 3**, the system 10 includes a first temperature regulation circuit (hereafter, referred to as the "first circuit 100") 100 configured to regulate a temperature of the temperature regulation location 20, 30, 40. The first circuit 100 is configured to circulate a flow of a first working fluid (not shown). In examples, the first working fluid is configured to transfer heat within the system 10 without undergoing a phase transition. Accordingly, the first working fluid may operate as and/or be referred to herein as a "coolant" and the first circuit 100 may operate as and/or be referred to herein as a "coolant circuit."

Referring to **FIG. 3****,** the system 10 includes a second temperature regulation circuit (hereafter, referred to as the "second circuit 200") 200 configured to regulate a temperature of the temperature regulation location 20, 30, 40. The second circuit 200 is configured to circulate a flow of a second working fluid (not shown). In examples, the second working fluid is configured to transfer heat within the system 10 and to undergo a phase transition when transferring heat within the system 10. Accordingly, the second working fluid may operate as and/or be referred to herein as a "refrigerant" and the second circuit 200 may operate as and/or be referred to herein as a "refrigerant circuit."

Referring to **FIG. 3****,** the first circuit 100 is configured to circulate the first working fluid through a first heat exchanger 140. Additionally or alternatively, the second circuit 200 is configured to circulate the second working fluid through the first heat exchanger 140. In examples, the first heat exchanger 140 is configured to transfer heat between the first working fluid and the second working fluid and, thus, the first circuit 100 and the second circuit 200. In examples, the first heat exchanger 140 may be arranged on a first connection line 102 included by the first circuit 100 and a first connection line 202 included by the second circuit 200. It is contemplated that the term "connection line" as used herein may correspond to a flow path, conduit, tubing, piping, and/or the like that is connected to and/or included by one or more of an inlet and an outlet of one or more element of the system 10 configured to receive, process, and/or distribute one or more of the first working fluid and the second working fluid. The first heat exchanger 140 may include one or more channel (not shown) in communication with the first connection line 102 of the first circuit 100 and one or more channel (not shown) in communication with the first connection line 202 of the second circuit 200. It is contemplated that the term "communication" as used herein may be understood as being configured to receive and/or distribute a flow of a fluid through a straight flow path or a junction including a plurality of flow paths.

The first heat exchanger 140 may be configured to transfer heat from the first working fluid and to the second working fluid and, thus, from the first circuit 100 to the second circuit 200. It is contemplated that heat may be transferred from the first working fluid to the second working fluid by evaporating the second working fluid to activate an endothermic reaction in the second working fluid, thereby causing an absorbance of heat by the second working fluid. Accordingly, the first heat exchanger 140 may be configured to operate as and/or be referred to as a "chiller."

The first heat exchanger 140 may include and/or be in communication with a flow restriction element, expansion element, and/or shut-off valve (not shown), such as an orifice tube, thermal expansion valve, thermostatic expansion valve, electronic expansion valve, and/or the like, configured to restrict input and/or output of one or more of the first working fluid and the second working fluid through the first heat exchanger 140. In this manner, flow and, thus, pressure and temperature, of one or more of the first working fluid and the second working fluid into and/or out of the first heat exchanger 140 may be regulated. Additionally or alternatively, in this manner, the first heat exchanger 140 may be used alone or in combination with one or more other heat exchanger 140, 150, 160, 170, 240 of the system 10.

Referring to **FIG. 3****,** the first circuit 100 is configured to circulate the first working fluid through a second heat exchanger 150. Additionally or alternatively, the second circuit 200 is configured to circulate the second working fluid through the second heat exchanger 150. In examples, the second heat exchanger 150 is configured to transfer heat between the first working fluid and the second working fluid and, thus, the first circuit 100 and the second circuit 200. In examples, the second heat exchanger 150 may be arranged on a second connection line 104 included by the first circuit 100 and a second connection line 204 included by the second circuit 200. The second heat exchanger 150 may include one or more channel (not shown) in communication with the second connection line 104 of the first circuit 100 and one or more channel (not shown) in communication with the second connection line 204 of the second circuit 200.

The second heat exchanger 150 may be configured to transfer heat from the second working fluid to the first working fluid. Additionally or alternatively, the second heat exchanger 150 may be configured to transfer heat from the second working fluid to the first working fluid without the second working fluid coming into contact with the first working fluid. It is contemplated that transfer of heat from the second working fluid to the first working fluid results in condensation of the second working fluid. Accordingly, the second heat exchanger 150 may be configured to operate as and/or be referred to as a "condenser." Additionally or alternatively, the second heat exchanger 150 may be configured to operate as and/or be referred to as a "coolant condenser" and/or "indirect condenser."

The second heat exchanger 150 may include and/or be in communication with a flow restriction element, expansion element, and/or shut-off valve (not shown), such as an orifice tube, thermal expansion valve, thermostatic expansion valve, electronic expansion valve, and/or the like, configured to restrict input and/or output of one or more of the first working fluid and the second working fluid through the second heat exchanger 150. In this manner, flow and, thus, pressure and temperature, of one or more of the first working fluid and the second working fluid into and/or out of the second heat exchanger 150 may be regulated. Additionally or alternatively, in this manner, the second heat exchanger 150 may be used alone or in combination with one or more other heat exchanger 140, 150, 160, 170, 240 of the system 10.

Referring to **FIG. 3**, the first circuit 100 is configured to circulate the first working fluid through a third heat exchanger 160. In examples, the third heat exchanger 160 is configured to transfer heat between the first working fluid and an internal environment of a vehicle 300. Additionally or alternatively, the third heat exchanger 160 is configured to transfer heat between the first working fluid and the passenger compartment 40. In particular, the third heat exchanger 160 is configured to transfer heat between the first working fluid and one or more gas, such as ambient air, received and/or recycled from the internal environment and/or external environment of the vehicle 300. In examples, the third heat exchanger 160 may be arranged on a third connection line 106 included by the first circuit 100. The third heat exchanger 160 may include one or more channel (not shown) in communication with the third connection line 106 of the first circuit 100 and one or more channel (not shown) in communication with the passenger compartment 40.

The third heat exchanger 160 may be configured to transfer heat from the first working fluid, circulating away from and/or carrying heat from one or more of the ESS 20, the EPU 30, the second heat exchanger 150, and an auxiliary heater 165 arranged on the first circuit 100, to the ambient air. It is contemplated that heat may be transferred from the first working fluid to the ambient air by release of heat from the first working fluid to the ambient air through radiation and/or convection, thereby increasing a temperature of the ambient air. After a temperature of the ambient air is increased, the ambient air may be circulated and/or recirculated toward the passenger compartment 40 to regulate and/or increase a temperature of the passenger compartment 40. Accordingly, the third heat exchanger 160 may be configured to operate as and/or be referred to as a "heater core." In this manner, a temperature of one or more of the ESS 20 and the EPU 30 may be decreased passively. Additionally or alternatively, a temperature of the passenger compartment 40 may be increased passively. Passive heating and/or cooling within the system 10 decreases energy consumption used for purposes of heating and/or cooling and, thus, decreases impact on driving range by the system 10.

Referring to **FIG. 3****,** the first circuit 100 is configured to circulate the first working fluid through a fourth heat exchanger 170. In examples, the fourth heat exchanger 170 is configured to transfer heat between the first working fluid and the external environment of the vehicle 300. In particular, the fourth heat exchanger 170 is configured to transfer heat between the first working fluid and one or more gas, such as ambient air, surrounding the vehicle 300. In examples, the fourth heat exchanger 170 may be arranged on a fourth connection line 108 included by the first circuit 100. The fourth heat exchanger 170 may include one or more channel (not shown) in communication with the fourth connection line 108 of the first circuit 100 and one or more channel (not shown) in communication with the external environment of the vehicle 300.

The fourth heat exchanger 170 may be configured to transfer heat from the first working fluid, circulating away from and/or carrying heat from one or more of the ESS 20 and the EPU 30, to the ambient air surrounding the vehicle 300. It is contemplated that heat may be transferred from the first working fluid to the ambient air surrounding the vehicle 300 by release of heat from the first working fluid to the ambient air surrounding the vehicle 300 through radiation and/or convection, thereby increasing a temperature of the ambient air surrounding the vehicle 300. Accordingly, the fourth heat exchanger 170 may be configured to operate as and/or be referred to as a "radiator." In this manner, a temperature of one or more of the ESS 20 and the EPU 30 may be decreased passively.

Referring to **FIG. 3**, the first circuit 100 is configured to circulate the first working fluid through the ESS 20. Additionally or alternatively, the first regulation circuit is configured to circulate the first working fluid through the EPU 30. In examples, circulation of the first working fluid through one or more of the ESS 20 and the EPU 30 transfers heat between the first working fluid and one or more of the ESS 20 and the EPU 30. In particular, circulation of the first working fluid through one or more of the ESS 20 and the EPU 30 may transfer heat conducted through materials and/or components of one or more of the ESS 20 and the EPU 30 to the first working fluid through radiation and/or convection. Additionally or alternatively, circulation of the first working fluid through one or more of the ESS 20 and the EPU 30 may transfer heat carried by the first working fluid to the conductive materials and/or components of one or more of the ESS 20 and the EPU 30 through radiation and/or convection.

In examples, the ESS 20 may be arranged on a fifth connection line 112 included by the first circuit 100. In examples in which the ESS 20 includes the first battery pack 22a and the second battery pack 22b, the first battery pack 22a may be arranged on a first branch 112a of the fifth connection line 112 and the second battery pack 22b may be arranged on a second branch 112b of the fifth connection line 112. However, the first branch 112a and the second branch 112b of the fifth connection line 112a, 112b will be referred to herein as "the fifth connection line 112," unless individual reference to the first branch 112a and the second branch 112b of the fifth connection line 112 is otherwise necessary.

The ESS 20 may include one or more channel (not shown) in communication with the fifth connection line 112 and one or more channel (not shown) in communication with the conductive materials and/or components of the ESS 20. The EPU 30 may be arranged on a sixth connection line 114. The EPU 30 may include one or more channel (not shown) in communication with the sixth connection line 114 and one or more channel (not shown) in communication with the conductive materials and/or components of the EPU 30. In this manner, the first circuit 100 is configured to regulate a temperature of one or more of the ESS 20 and the EPU 30 by carrying heat away from and/or towards one or more of the ESS 20 and the EPU 30.

Referring to **FIG. 3****,** the first circuit 100 may be configured to circulate the first working fluid through the auxiliary heater 165. In examples, the auxiliary heater 165 may be electric. The auxiliary heater 165 is configured to generate and transfer heat to the first working fluid to increase a temperature of the first working fluid. It is contemplated that the auxiliary heater 165 is configured to generate and transfer heat to the first working fluid to increase a temperature of the first working fluid when transfer of heat from one or more of the first heat exchanger 140, the second heat exchanger 150, the ESS 20, and the EPU 30 to the first working fluid is unavailable and/or insufficient to reach a target temperature and/or when a rapid transfer of heat to the first working fluid is required. In this manner, a temperature of one or more of the ESS 20, the EPU 30, and the passenger compartment 40 may be increased actively. In examples, the auxiliary heater 165 may be arranged on a seventh connection line 116 included by the first circuit 100. The auxiliary heater 165 may include one or more channel (not shown) in communication with the seventh connection line 116 of the first circuit 100 configured to receive the first working fluid.

Referring to **FIG. 3****,** the second circuit 200 is configured to circulate the second working fluid through a compressor 220. In examples, the compressor 220 is configured to increase a pressure of the second working fluid, thereby increasing a temperature of the second working fluid. In examples, the compressor 220 may be arranged on a third connection line 206 included by the second circuit 200. The compressor 220 may include one or more channel (not shown) in communication with the third connection line 206 of the second circuit 200 configured to receive the second working fluid. In examples, the third connection line 206 of the second circuit 200 is in communication with the second connection line 204 of the second circuit 200 and, thus second heat exchanger 150. In this manner, the second working fluid pressurized by the compressor 220 may be condensed by the second heat exchanger 150. Accordingly, communication between the compressor 220 and the second heat exchanger 150 may be configured to operate and/or be referred to as part of a "refrigeration cycle."

Referring to **FIG. 3****,** the second circuit 200 is configured to circulate the second working fluid through a fifth heat exchanger 240. In examples, the fifth heat exchanger 240 is configured to transfer heat from the ambient air received and/or recycled from the external environment and/or the internal environment of the vehicle 300 to the second working fluid through conduction and/or convection, thereby increasing a temperature of the second working fluid and decreasing a temperature of the ambient air. It is contemplated that transfer of heat from the ambient air to the second working fluid causes the second working fluid to undergo a phase transition from liquid to gas and, thus, to evaporate. Accordingly, the fifth heat exchanger 240 may be configured to operate as and/or be referred to as an "evaporator."

In examples, the fifth heat exchanger 240 may be arranged on a fourth connection line 208 included by the second circuit 200. The fifth heat exchanger 240 may include one or more channel (not shown) in communication with the fourth connection line 208 of the second circuit 200 configured to receive the second working fluid. In examples, the fourth connection line 208 of the second circuit 200 is in communication with the second connection line 204 of the second circuit 200 and, thus, the second heat exchanger 150. In this manner, the second working fluid condensed by the second heat exchanger 150 may be evaporated by the fifth heat exchanger 240. Accordingly, communication between the second heat exchanger 150 and the fifth heat exchanger 240 may be configured to operate and/or be referred to as part of a "refrigeration cycle." In this manner, a temperature of the passenger compartment 40 may be decreased actively.

The fifth heat exchanger 240 may include and/or be in communication with a flow restriction element, expansion element, and/or shut-off valve (not shown), such as an orifice tube, thermal expansion valve, thermostatic expansion valve, electronic expansion valve, and/or the like, configured to restrict input and/or output of one or more of the first working fluid and the second working fluid through the fifth heat exchanger 240. In this manner, flow and, thus, pressure and temperature, of one or more of the first working fluid and the second working fluid into and/or out of the fifth heat exchanger 240 may be regulated. Additionally or alternatively, in this manner, the fifth heat exchanger 240 may be used alone or in combination with one or more other heat exchanger 140, 150, 160, 170, 240 of the system 10.

As illustrated by **FIG. 3**, one or more of the first connection line 102, the second connection line 104, the third connection line 106, the fourth connection line 108, and the fifth connection line 112 of the first circuit 100 may be arranged in parallel. In examples, each of the first connection line 102, the second connection line 104, the third connection line 106, the fourth connection line 108, and the fifth connection line 112 of the first circuit 100 are arranged in parallel. Accordingly, each of the first heat exchanger 140, the second heat exchanger 150, the third heat exchanger 160, the fourth heat exchanger 170, the ESS 20, and the EPU 30 are arranged in parallel.

Additionally or alternatively, one or more of the first connection line 202, the second connection line 204, and the fourth connection line 208 of the second circuit 200 may be arranged in parallel. In examples, each of the first connection line 102, the second connection line 104, and the fourth connection line 208 of the second circuit 200 are arranged in parallel. Accordingly, the first heat exchanger 140, the second heat exchanger 150, and the evaporator 240 are arranged in parallel. In particular, the first heat exchanger 140, the second heat exchanger 150, and the evaporator 240 are arranged in parallel, with the compressor 220 arranged serially with respect to the second heat exchanger 150. In this manner, the first circuit 100 and the second circuit 200 and, thus, the system 10, may be optimized and/or simplified by positioning of one or more valve member 180, 182, 184, 186, 188 and/or one or more pump member 190, 192, 194. Additionally or alternatively, in this manner, the system 10 may be configured such that only one first circuit 100 and/or only one tank (not shown) configured to store the first working fluid is required for operation of the system 10. As such, the system 10 simplifies and reduces a number of thermal loops and components utilized to regulate a temperature of one or more of the ESS 20, the EPU 30, and the passenger compartment 40.

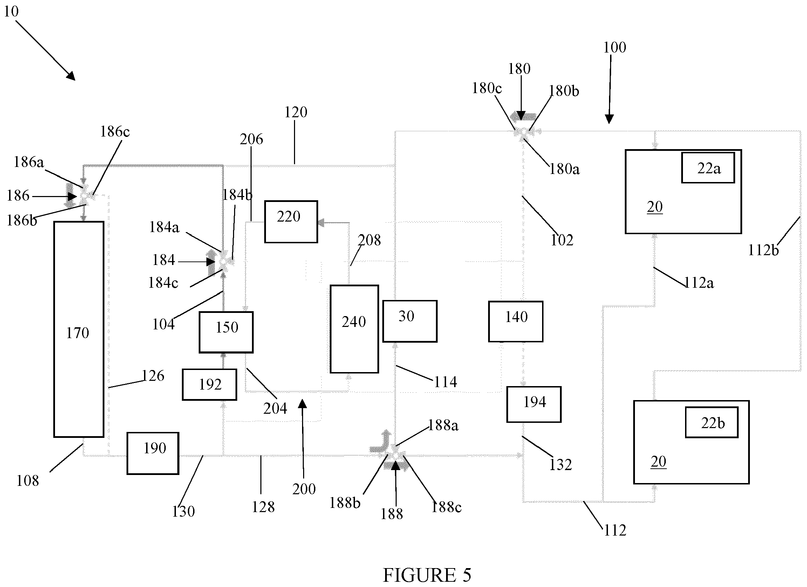

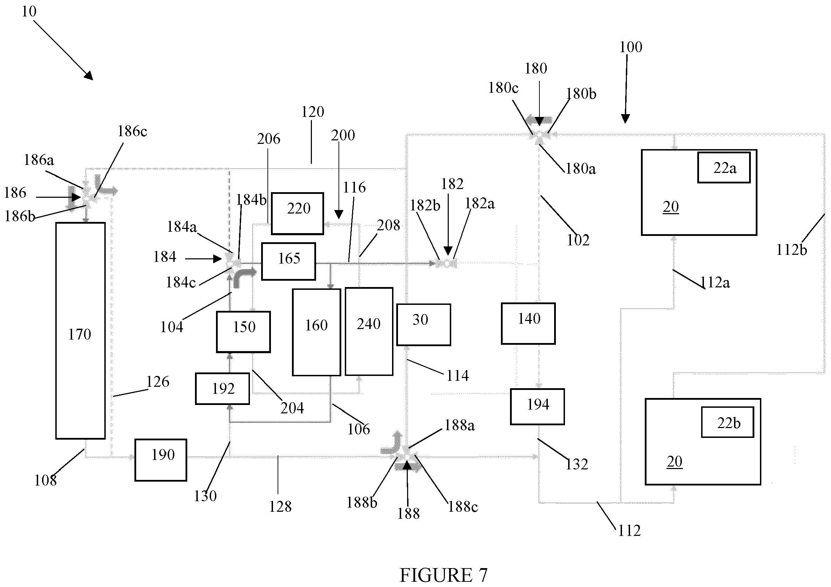

As shown by **FIG. 3**, the first circuit 100 includes one or more valve member 180, 182, 184, 186, 188 configured to direct circulation of the first working fluid through the first circuit 100. Additionally or alternatively, the one or more valve member 180, 182, 184, 186, 188 is configured to redirect circulation of the first working fluid through one or more sub-circuit of the first circuit 100. Referring to **FIGS. 5-10****,** is contemplated that the one or more sub-circuit of the first circuit 100 corresponds to the one or more predetermined heating and/or cooling mode of the system 10. As illustrated by FIGS. 5 and 7, the one or more valve member 180, 182, 184, 186, 188, may be configured to redirect circulation of the first working fluid through at least a first sub-circuit and a second sub-circuit of the first circuit 100. In examples, redirection of circulation of the first working fluid through at least the first sub-circuit and the second sub-circuit of the first circuit 100 may correspond to a second mode (see FIG. 5) or a fourth mode (see FIG. 7) of predetermined heating and/or cooling modes of the system 10. The one or more valve member 180, 182, 184, 186, 188 is configured to be transitioned between a partially open position, an open position, and a closed position to direct circulation of the first working fluid through the first circuit 100 and/or redirect circulation of the first working fluid through the one or more sub-circuit of the first circuit 100.

Referring to **FIG. 3****,** the first circuit 100 includes a plurality of valve members 180, 182, 184, 186, 188 configured to direct and/or redirect circulation of the first working fluid through the system 10. The first circuit 100 includes a first valve member 180. In examples, the first valve member 180 may include a three-way valve including a first port 180a, a second port 180b, and a third port 180c. The first port 180a of the first valve member 180 is in communication with the first connection line 102 of the first circuit 100 and, thus, the first heat exchanger 140. The second port 180b of the first valve member 180 is in communication with the fifth connection line 112 and, thus, the ESS 20. The third port 180c of the first valve member 180 is in communication with the sixth connection line 114 and, thus, the EPU 30, a first intermediate connection line 120 in communication with the sixth connection line 114, and the seventh connection line 116 in communication with the sixth connection line 114.

It is contemplated that the term "intermediate" as used herein with reference to an "intermediate connection line" may be understood to correspond to a connection line of the first circuit 100 that extends between and/or from a junction in communication with one or more of the first connection line 102, second connection line 104, third connection line 106, fourth connection line 108, fifth connection line 112, sixth connection line 114, and seventh connection line 116 of the first circuit 100. Referring to **FIG. 3**, the first intermediate connection line 120 is in communication with the sixth connection line 114, a third valve member 184, and a fourth valve member 186. In examples, the first connection line 102 may be in communication with a second intermediate connection line 118 in communication with a second valve member 182.

Referring to **FIG. 3****,** the second valve member 182 may include a two-way valve including a first port 182a and a second port 182b. The first port 182a of the second valve member 182 may be in communication with the second intermediate connection line 118 and, thus, the first heat exchanger 140 and the first valve member 180. The second port 182b of the second valve member 182 may be in communication with the third connection line 106, the sixth connection line 114, and the seventh connection line 116 and, thus, the third heat exchanger 160, the EPU, and the auxiliary heater 165, respectively.

Referring to **FIG. 3****,** the third valve member 184 may include a three-way valve including a first port 184a, a second port 184b, and a third port 184c. The first port 184a of the third valve member 184 is in communication with the first intermediate connection line 120. The second port 184b of the third valve member 184 is in communication with the seventh connection line 116 and, thus, the auxiliary heater 165. The third port 184c of the third valve member 184 is in communication with the second connection line 104 and, thus, the second heat exchanger 150.

Referring to **FIG. 3****,** the fourth valve member 186 may include a three-way valve including a first port 186a, a second port 186b, and a third port 186c. The first port 186a of the fourth valve member 186 is in communication with the first intermediate connection line 120. The second port 186b of the fourth valve member 186 is in communication with the fourth connection line 108 and, thus, the fourth heat exchanger 170. The third port 186c is in communication with a bypass connection line 126 configured to redirect the first working fluid around the fourth heat exchanger 170.

Referring to **FIG. 3****,** the first circuit 100 includes a fifth valve member 188. The fifth valve member 188 may include a three-way valve including a first port 188a, a second port 188b, and a third port 188c. The first port 188a of the fifth valve member 188 is in communication with the sixth connection line 114 and, thus, the EPU 30. The second port 188b of the fifth valve member 188 is in communication with a third intermediate connection line 128. The third intermediate connection line 128 is in communication with a first pump member 190 arranged on the third intermediate connection line 128 and a fourth intermediate connection line 130. The fourth intermediate connection line 130 is communication with a second pump member 192 arranged on the fourth intermediate connection line 130 and the third connection line 106 and, thus, the third heat exchanger 160. The third port 188c of the fifth valve member 188 is in communication with a fifth intermediate connection line 132. The fifth intermediate connection line 132 is in communication with a third pump member 194 arranged on the fifth intermediate connection line 132 and the fifth connection line 112 and, thus, the ESS 20.

As shown by **FIG. 3**, in examples, the first circuit 100 includes the first pump member 190, the second pump member 192, and the third pump member 194. The first pump member 190, the second pump member 192, and the third pump member 194 are configured to regulate a flow rate of the first working fluid through the first circuit 100 by increasing or decreasing the flow rate of the first working fluid through the first circuit 100. The first pump member 190 is in communication with the fourth connection line 108, the bypass connection line 126, and the third intermediate connection line 128, thereby being configured to adjust a flow rate of the first working fluid to and/or from the fourth heat exchanger 170, the bypass connection line 126, the second pump 192, and the fifth valve 188, respectively. The second pump member 192 is in communication with the second connection line 104 and the fourth intermediate connection line 130, thereby being configured to adjust a flow rate of the first working fluid to and/or from the fourth heat exchanger 170, the bypass connection line 126, the first pump 190, and the second heat exchanger 150. The third pump member 194 is in communication with the first connection line 102 and the fifth intermediate connection line 132, thereby being configured to adjust a flow rate of the first working fluid to and/or from the first heat exchanger 140 and the ESS 20.

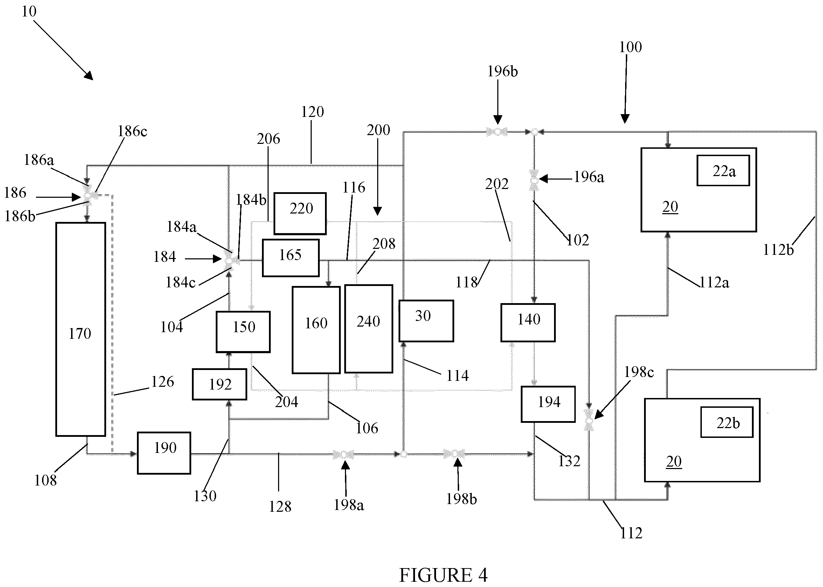

Referring to **FIG. 4**, it is contemplated that the system 10 may include an alternative arrangement of the plurality of the valve members 180, 182, 184, 186, 188. In examples, the first valve member 180 may be replaced by a first pair of valve members 196a, 196b, each in communication with a junction in communication with the first connection line 102, the fifth connection line 112, and the sixth connection line 114. In examples, a first valve member 196a of the first pair of valve members 196a, 196b is arranged on the first connection line 102 and a second valve member 196b of the first pair of valve members 196a, 196b is arranged on the sixth connection line 114. The first pair of valve members 196a, 196b may include two-way valves. Additionally or alternatively, the fifth valve member 188 may be replaced by a second pair of valve members 198a, 198b, each in communication with a junction in communication with the sixth connection line 114, the third intermediate connection line 128, and the fifth intermediate connection line 132. In examples, a first valve member 198a of the second pair of valve members 198a, 198b is arranged on the third intermediate connection line 128 and a second valve member 198b of the second pair of valve members 198a, 198b is arranged the fifth intermediate connection line 132. The second pair of valve members 198a, 198b may include two-way valves. Additionally or alternatively, a third valve member 198c may be arranged in communication with the second intermediate connection line 118 and the fifth intermediate connection line 132. The third valve member 198c may include a two-way valve.

As illustrated by **FIGS. 5-10**, the ECU 50 may control the system 10 according to one or more predetermined heating and/or cooling mode configured to heat and/or cool one or more of the ESS 20, the EPU 30, and the passenger compartment 40. In examples, the system 10 may include a plurality of predetermined heating and/or cooling modes.

Referring to **FIG. 5**, the system 10 may include a first mode configured to passively regulate a temperature of one or more of the ESS 20 and the EPU 30 and to actively regulate a temperature of the passenger compartment 40. In particular, the first mode may be configured to passively cool one or more of the ESS 20 and the EPU 30 and to actively cool the passenger compartment 40.

In the first mode, the first circuit 100 may be operated by circulating the first working fluid through one or more of the ESS 20 and the EPU 30 to passively cool one or more of the ESS 20 and the EPU 30. The first working fluid, carrying heat transferred from one or more of the ESS 20 and the EPU 30, is directed to the fourth heat exchanger 170 to release heat to the exterior of the vehicle 300 through the fourth heat exchanger 170. In examples, the first valve 180 and the fifth valve 188 may be operated to direct the first working fluid circulated through one or more of the ESS 20 and the EPU 30 to the first intermediate connection line 120. The first working fluid circulating through the first intermediate connection line 120 is directed to the third valve 186, which is operated to direct the first working fluid to the fourth connection line 108 and, thus, the fourth heat exchanger 170. Additionally or alternatively, the third valve 186 may be operated to direct at least a portion of the first working fluid to the bypass connection line 126 if a target temperature of the first working fluid has not been met. In this manner, the first mode of the system 10 may be configured for passively cooling one or more of the ESS 20 and the EPU 30.

In the first mode, the second working is directed to the compressor 220 to pressurize the second working fluid, to the second heat exchanger 160 to condense the second working fluid, and to the evaporator 240 to evaporate the second working fluid, to thereby decrease a temperature of ambient air circulated to the passenger compartment 40 as part of a refrigeration and/or air conditioning cycle. In this manner, the first mode of the system 10 may be configured for actively cooling the passenger compartment 40.

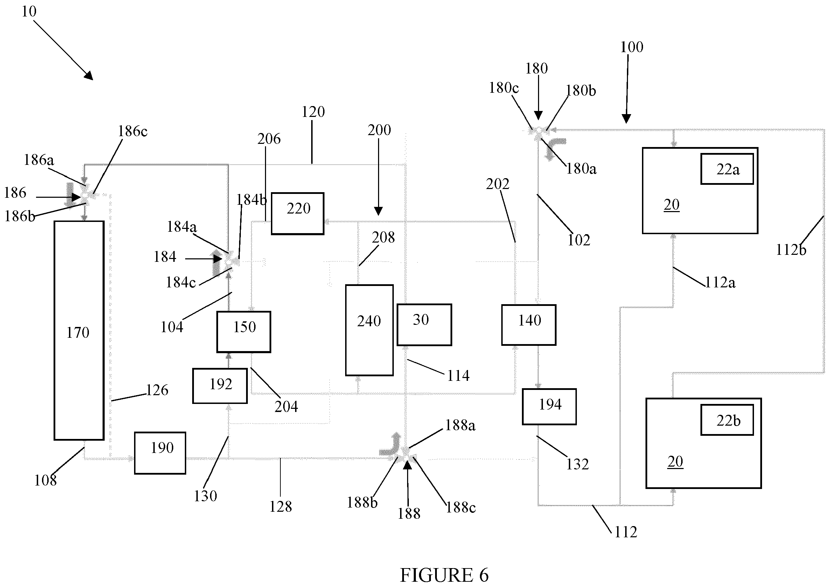

Referring to **FIG. 6**, the system 10 may include a second mode configured to actively regulate a temperature of one or more of the ESS 20 and the EPU 30, to passively regulate a temperature of one or more of the ESS 20 and the EPU 30, and to actively regulate a temperature of the passenger compartment 40. In particular, the second mode may be configured to actively cool the ESS 20, to passively cool the EPU 30, and to actively cool the passenger compartment 40.

In the second mode, the first valve 180 and the fifth valve 188 may be operated to direct the first working fluid circulated through the ESS 20 through the first heat exchanger 140 to transfer heat to the second working fluid, reducing a temperature of the first working fluid circulated through the ESS 20. Further, the fourth valve 186 and the fifth valve 188 may be operated to direct the first working fluid circulated through the EPU 30 through the fourth heat exchanger 170 to release heat to the external environment. The passenger compartment 40 may be cooled in a manner substantially similar to the first mode. In this manner, the second mode may be configured to actively cool the ESS 20, to passively cool the EPU 30, and to actively cool the passenger compartment 40.

Referring to **FIG. 7**, the system 10 may include a third mode configured to passively regulate a temperature of one or more of the ESS 20 and the EPU 30 and to actively regulate a temperature of the passenger compartment 40. In particular, the third mode may be configured to passively cool one or more of the ESS 20 and the EPU 30 and to demist the passenger compartment 40.

In the third mode, one or more of the ESS 20 and the EPU 30 may be cooled in a manner substantially similar to the first mode. Additionally or alternatively, if further cooling of the ESS 20 is required, the ESS 20 may be cooled in a manner substantially similar to the second mode. In the third mode, the second circuit 200 is operated to cool ambient air circulated to the passenger compartment 40, in a manner substantially similar to the first mode, to condense moisture in the ambient air circulated to the passenger compartment 40. Additionally, in the third mode, the first circuit 100 is operated to heat the ambient air circulated to the passenger compartment 40 with the third heat exchanger 160, thereby circulating dry, reheated, demisted ambient air to the passenger compartment 40. In examples, if ambient air circulated to the passenger compartment 40 has a temperature above a predetermined threshold for being provided to the passenger compartment 40, the third valve 184 may be operated to direct at least a portion of the first working fluid to the first intermediate connection line 120 and, thus, the fourth heat exchanger 170 to dissipate heat to the external environment. Additionally or alternatively, if ambient air circulated to the passenger compartment 40 has a temperature that is below a predetermined temperature for being provided to the passenger compartment 40, the auxiliary heater 165 may be operated to increase a temperature of the ambient air before circulation to the passenger compartment 40. In this manner, the third mode may be configured to passively cool one or more of the ESS 20 and the EPU 30 and to demist the passenger compartment 40.

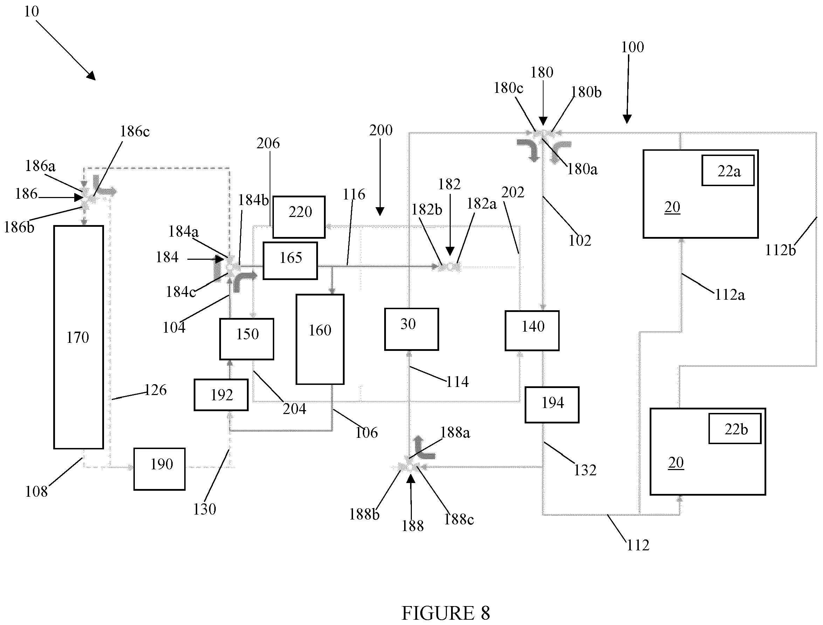

Referring to **FIG. 8**, the system 10 may include a fourth mode configured to actively and/or passively regulate a temperature of the passenger compartment 40. In particular, the fourth mode may be configured to actively and/or passively heat the passenger compartment 40.

In the fourth mode, the first valve 180 and the fourth valve 188 may be operated to direct the first working fluid circulated through and carrying heat from one or more of the ESS 20 and the EPU 30 to the first heat exchanger 140 to transfer heat from the first working fluid to the second working fluid and, thus, from the first circuit 100 to the second circuit 200. The second circuit 200 is operated by directing the second working fluid to the compressor 220 to further increase a temperature of the second working fluid. The second working fluid circulated through the compressor 220 is circulated through the second heat exchanger 150 to transfer heat from the second working fluid to the first working fluid and, thus the second circuit 200 to the first circuit 100. The first working fluid circulated through the second heat exchanger 160, carrying heat transferred from the second working fluid, is directed to the third heat exchanger 160 to increase a temperature of ambient air circulated to the passenger compartment 40. In this manner, the passenger compartment 40 may be at least partially passively heated.

Additionally or alternatively, the first working fluid circulated through the second heat exchanger 150 may be directed to the auxiliary heater 165 to further increase a temperature of the first working fluid and/or rapidly increase a temperature of the first working fluid circulated to the third heat exchanger 160. Additionally or alternatively, the first working fluid may be directed to the auxiliary heater 165 to further increase a temperature of the first working fluid when a heating power of the second heat exchanger 150 is less than a target heating power of the second heat exchanger 150. In this manner, the passenger compartment 40 may be actively heated.

It is contemplated that a heating capacity and/or coefficient of performance of the system 10 operated in the fourth mode is dependent upon a temperature of the first working fluid circulated to the first heat exchanger 150 from one or more of the ESS 20 and the EPU 30. In examples, a higher temperature of the first working fluid circulated to the first heat exchanger 150 corresponds to a higher heating capacity and/or coefficient of performance. In examples, the heating capacity and/or coefficient of performance may be adjusted by control of a speed of the compressor 220. Referring to **FIG. 8**, if a temperature of the first working fluid exceeds a target temperature for heating the passenger compartment 40, the third valve 184 and the fourth valve 186 may be operated to direct at least a portion of the first working fluid to the fourth heat exchanger 170 to dissipate heat to the external environment before being circulated to the second heat exchanger 150 to heat the passenger compartment 40. Additionally or alternatively, the fifth valve 188 and the first pump 190 may be operated to direct at least a portion of the first working fluid to the fourth heat exchanger 170 to dissipate heat to the external environment before being circulated to the second heat exchanger 150 to heat the passenger compartment 40.

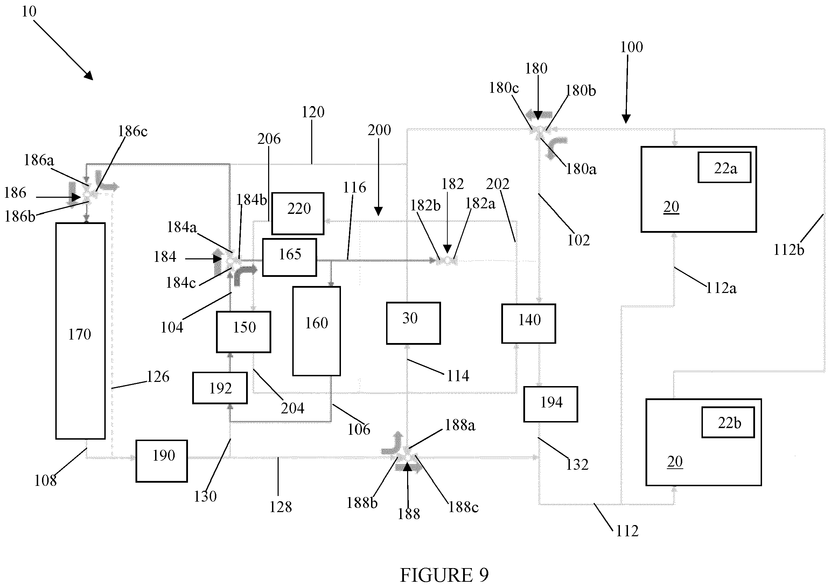

Referring to **FIG. 9**, system 10 may include a fifth mode configured to passively regulate a temperature of one or more of the ESS 20 and the EPU 30 and to passively regulate a temperature of the passenger compartment 40. In particular, the fifth mode may be configured to passively cool one or more of the ESS 20 and the EPU 30 and to passively heat the passenger compartment 40.

In the fifth mode, the passenger compartment 40 is heated in a manner substantially similar to the fourth mode. In the fifth mode, the first valve 180, the third valve 184, and the fourth valve 186 are operated to circulate the first working fluid to the fourth heat exchanger 170 to dissipate heat to the external environment before being circulated to the second heat exchanger 150 to heat the passenger compartment 40. In this manner, the fifth mode may be configured to passively cool one or more of the ESS 20 and the EPU 30 and to passively heat the passenger compartment 40.

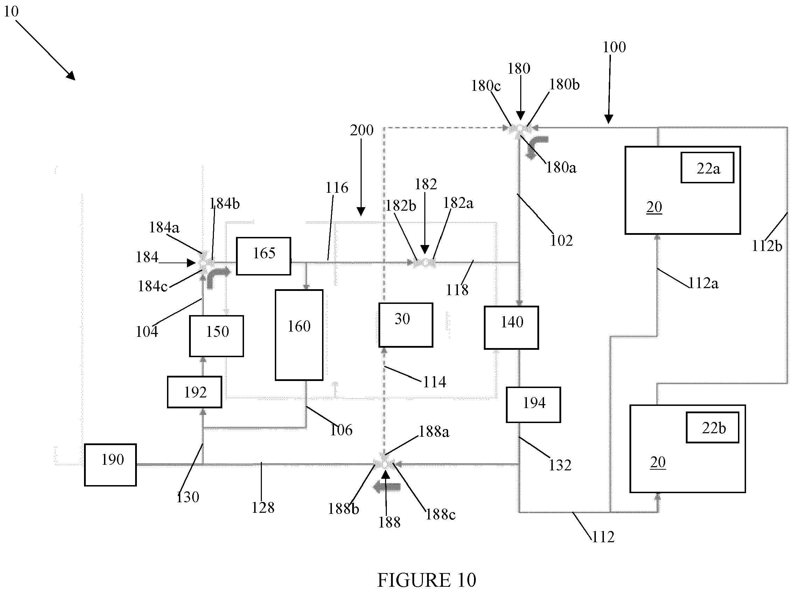

Referring to **FIG. 10**, the system 10 may include and a sixth mode configured to actively regulate a temperature of one or more of the ESS 20 and the EPU 30 and to actively regulate a temperature of the passenger compartment 40. In particular, the sixth mode may be configured to actively heat the ESS 20 and to actively heat the passenger compartment 40.

In the sixth mode, the passenger compartment 40 is heated by use of the auxiliary heater 165 in a manner substantially similar to the fourth mode. In the fourth mode, the second valve 182 is operated to direct the first working fluid circulated through the auxiliary heater 165 to the ESS 20 to heat the ESS 20. Additionally or alternatively, it is contemplated additional heat may be generated by increased usage of the EPU 30 and operating the first valve 180 to direct the first working fluid circulated through the EPU 30 to the ESS 20. In this manner, the sixth mode may be configured for actively heating the ESS 20 and actively heating the passenger compartment 40.

Accordingly, in the manner described and in view of aspects illustrated herein, the system 10 is capable of operating at least six heating and/or cooling modes to dynamically regulate a temperature of one or more of the ESS 20, the EPU 30, and the passenger compartment 40, in a manner that simplifies and reduces a number of thermal loops and components utilized to regulate a temperature of one or more of the ESS 20, the EPU 30, and the passenger compartment 40.

According to examples of the system 10, the system 10 may be provided as follows:
Example 1: A thermal management system 10 configured for use on a vehicle 300, the thermal management system 10 being configured to regulate a temperature of one or more temperature regulation location 20, 30, 40 on a vehicle 300, the thermal management system 10 comprising: a first temperature regulation circuit 100 configured to transfer heat within the thermal management system 10, the first temperature regulation circuit 100 being configured to circulate a flow of a first working fluid; and a second temperature regulation circuit 200 configured to transfer heat within the thermal management system 10, the second temperature regulation circuit being configured to circulate a flow of a second working fluid; and a controller 50 configured to operate the first temperature regulation circuit 100 to direct the flow of the first working fluid and the second temperature regulation circuit 200 to direct the flow of the second working fluid; wherein the first temperature regulation circuit 100 is configured to circulate the first working fluid through a first heat exchanger 140 configured to transfer heat between the first working fluid and the second working fluid, a second heat exchanger 150 configured to transfer heat between the first working fluid and the second working fluid, a third heat exchanger 160 configured to transfer heat between the first working fluid and the internal environment of a vehicle 300, a fourth heat exchanger 170 configured to transfer heat between the first working fluid and the external environment of a vehicle 300, a first temperature regulation location 20 of a vehicle 300, and a second temperature regulation location 30 of a vehicle 300; wherein the second temperature regulation circuit 200 is configured to circulate the second working fluid through the first heat exchanger 140, the second heat exchanger 150, a compressor 220, and an evaporator 240; and wherein the controller 50 is configured to convert one or more of the first temperature regulation circuit 100 to a first temperature regulation sub-circuit and the second temperature regulation circuit 200 to a second temperature regulation sub-circuit to direct the flow of one or more of the first working fluid through the first temperature regulation circuit and the second working fluid through the second temperature regulation circuit.
Example 2: The thermal management system 10 of Example 1, wherein the first temperature regulation circuit 100 includes a first connection line 102, a second connection line 104, a third connection line 106, a fourth connection line 108, a fifth connection line 112, and a sixth connection line 114, and wherein the first heat exchanger 140 is arranged on the first connection line 102, the second heat exchanger 150 is arranged on the second connection line 104, the third heat exchanger 160 is arranged on the third connection line 106, the fourth heat exchanger 170 is arranged on the fourth connection line 108, the first temperature regulation location 20 is arranged on the fifth connection line 112, and the second temperature regulation location 30 is arranged on the sixth connection line 114.
Example 3: The thermal management system 10 of Example 2, wherein the first connection line 102, the second connection line 104, the third connection line 106, the fourth connection line 108, the fifth connection line 112, and the sixth connection line 114 of the first temperature regulation circuit 100 are arranged in parallel.
Example 4: The thermal management system 10 of any of Examples 1-3, wherein the second temperature regulation circuit 200 includes a first connection line 202, a second connection line 204, a third connection line 208, and wherein the first heat exchanger 102) is arranged on the first connection line 202, the second heat exchanger 150 is arranged on the second connection line 204, and the evaporator 240 is arranged on the third connection line 208.
Example 5: The thermal management system 10 of Example 4, wherein the first connection line 202, the second connection line 204, and the third connection line 208 of the second temperature regulation circuit 200 are arranged in parallel.
Example 6: The thermal management system 10 of any of Examples 1-5, wherein the first temperature regulation circuit 100 includes one or more valve member 180, 182, 184, 186, 188 configured to transition between a partially open position, an open position, and a closed position to direct the flow of the first working fluid through the first temperature regulation circuit 100.
Example 7: The thermal management system 10 of Example 6, wherein the first temperature regulation circuit 100 includes a first valve member 180 arranged in communication with the first connection line 102 and a second valve member 184 arranged in communication with the second connection line 104.
Example 8: The thermal management system 10 of Example 6, wherein the first temperature regulation circuit 100 includes a first valve member 180 arranged in communication with the fifth connection line 112 and a second valve member 188 arranged in communication with the sixth connection line 114.
Example 9: The thermal management system 10 of any of Examples 7-8, wherein the first valve member 180 and the second valve member 184, 188 are arranged in parallel.
Example 10: The thermal management system 10 of any of Examples 7-9, wherein the first valve member 180 and the second valve member 184, 188 each include a three-way valve.
Example 11: The thermal management system 10 of any of Examples 1-10, wherein the first temperature regulation circuit 100 is configured to circulate the first working fluid through one or more pump member 190, 192, 194 configured to increase or decrease a flow rate of the first working fluid.
Example 12: The thermal management system 10 of Example 11, wherein the first temperature regulation circuit 100 includes a first pump 194 arranged in communication with the first connection line 102.
Example 13: The thermal management system 10 of Example 12, wherein the first temperature regulation circuit 100 includes a second pump 192 arranged in communication with the second connection line 104.
Example 14: The thermal management system 10 of Example 13, wherein the first pump 192 and the second pump 194 are arranged in parallel.
Example 15: The thermal management system 10 of any of Examples 1-14, wherein the temperature regulation location 20, 30, 40 corresponds to one or more of an energy storage system 20 of a vehicle 300, an electric power unit 30 of a vehicle 300, and a passenger compartment 40 of a vehicle 300.
Example 16: The thermal management system 10 of any of Examples 1-15, wherein the first working fluid is a coolant.
Example 17: The thermal management system 10 of any of Examples 1-16, wherein the second working fluid is a refrigerant.
Example 18: A vehicle 300 configured to regulate a temperature of one or more temperature regulation location 20, 30, 40, the vehicle 300 comprising: an energy storage system 20, an electric power unit 30, a passenger compartment 40, and the thermal management system 10 according to any of Examples 1-17.
Example 19: A method of regulating a temperature of one or more temperature regulation location 20, 30, 40 on a vehicle 300, the method comprising: providing the thermal management system 10 according to any of Examples 1-17 and operating the controller 50 to convert one or more of the first temperature regulation circuit 100 to a first temperature regulation sub-circuit and the second temperature regulation circuit 200 to a second temperature regulation sub-circuit to direct the flow of one or more of the first working fluid through the first temperature regulation circuit 100 and the second working fluid through the second temperature regulation circuit 200.
Example 20: The method of Example 19, wherein one or more of the first temperature regulation sub-circuit and the second temperature regulation sub-circuit correspond to one or more mode of operation of the thermal management system 10.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

Additionally, all of the disclosed features of a system may be transposed, alone or in combination, to a method and vice versa.

## Claims

1. A thermal management system (10) configured for use on a vehicle (300), the thermal management system being configured to regulate a temperature of one or more temperature regulation location (20, 30, 40) on a vehicle, the thermal management system comprising:
a first temperature regulation circuit (100) configured to transfer heat within the thermal management system, the first temperature regulation circuit being configured to circulate a flow of a first working fluid;
a second temperature regulation circuit (200) configured to transfer heat within the thermal management system, the second temperature regulation circuit being configured to circulate a flow of a second working fluid; and
a controller (50) configured to operate the first temperature regulation circuit to direct the flow of the first working fluid and the second temperature regulation circuit to direct the flow of the second working fluid;
wherein, the first temperature regulation circuit is configured to circulate the first working fluid through a first heat exchanger (140) configured to transfer heat between the first working fluid and the second working fluid, a second heat exchanger (150) configured to transfer heat between the first working fluid and the second working fluid, a third heat exchanger (160) configured to transfer heat between the first working fluid and an internal environment of a vehicle (300), a fourth heat exchanger (170) configured to transfer heat between the first working fluid and an external environment of a vehicle, a first temperature regulation location (20) of a vehicle, and a second temperature regulation location (30) of a vehicle;
wherein, the second temperature regulation circuit is configured to circulate the second working fluid through the first heat exchanger, the second heat exchanger, a compressor (220), and an evaporator (240); and
wherein, the controller is configured to convert one or more of the first temperature regulation circuit to a first temperature regulation sub-circuit and the second temperature regulation circuit to a second temperature regulation sub-circuit to direct the flow of one or more of the first working fluid through the first temperature regulation circuit and the second working fluid through the second temperature regulation circuit.

2. The thermal management system (10) of claim 1, wherein the first temperature regulation circuit (100) includes a first connection line (102), a second connection line (104), a third connection line (106), a fourth connection line (108), a fifth connection line (112), and a sixth connection line (114), and
wherein the first heat exchanger (140) is arranged on the first connection line, the second heat exchanger (150) is arranged on the second connection line, the third heat exchanger (160) is arranged on the third connection line, the fourth heat exchanger (170) is arranged on the fourth connection line, the first temperature regulation location (20) is arranged on the fifth connection line, and the second temperature regulation location (30) is arranged on the sixth connection line.

3. The thermal management system (10) of claim 2, wherein the first connection line (102), the second connection line (104), the third connection line (106), the fourth connection line (108), the fifth connection line (112), and the sixth connection line (114) of the first temperature regulation circuit (100) are arranged in parallel.

4. The thermal management system (10) of any of claims 1-3, wherein the second temperature regulation circuit (200) includes a first connection line (202), a second connection line (204), a third connection line (208), and
wherein the first heat exchanger (102) is arranged on the first connection line, the second heat exchanger (150) is arranged on the second connection line, and the evaporator (240) is arranged on the third connection line.

5. The thermal management system (10) of claim 4, wherein the first connection line (202), the second connection line (204), and the third connection line (208) of the second temperature regulation circuit (200) are arranged in parallel.

6. The thermal management system (10) of any of claims 1-5, wherein the first temperature regulation circuit (100) includes one or more valve member (180, 182, 184, 186, 188) configured to transition between a partially open position, an open position, and a closed position to direct the flow of the first working fluid through the first temperature regulation circuit.

7. The thermal management system (10) of claim 6, wherein the first temperature regulation circuit (100) includes a first valve member (180) arranged in communication with the first connection line (102) and a second valve member (184) arranged in communication with the second connection line (104).

8. The thermal management system (10) of claim 6, wherein the first temperature regulation circuit (100) includes a first valve member (180) arranged in communication with the fifth connection line (112) and a second valve member (188) arranged in communication with the sixth connection line (114).

9. The thermal management system (10) of any of claims 7-8, wherein the first valve member (180) and the second valve member (184, 188) are arranged in parallel.

10. The thermal management system (10) of any of claims 7-9, wherein the first valve member (180) and the second valve member (184, 188) each include a three-way valve.

11. The thermal management system (10) of any of claims 1-10, wherein the first temperature regulation circuit (100) is configured to circulate the first working fluid through one or more pump member (190, 192, 194) configured to increase or decrease a flow rate of the first working fluid.

12. The thermal management system (10) of claim 11, wherein the first temperature regulation circuit (100) includes a first pump (194) arranged in communication with the first connection line (102).

13. The thermal management system (10) of claim 12, wherein the first temperature regulation circuit (100) includes a second pump (192) arranged in communication with the second connection line (104).

14. The thermal management system (10) of claim 13, wherein the first pump (192) and the second pump (194) are arranged in parallel.

15. The thermal management system (10) of any of claims 1-14, wherein the temperature regulation location (20, 30, 40) corresponds to one or more of an energy storage system (20) of a vehicle (300), an electric power unit (30) of a vehicle, and a passenger compartment (40) of a vehicle.

16. The thermal management system (10) of any of claims 1-15, wherein the first working fluid is a coolant.

17. The thermal management system (10) of any of claims 1-16, wherein the second working fluid is a refrigerant.

18. A vehicle (300) configured to regulate a temperature of one or more temperature regulation location (20, 30, 40), the vehicle comprising:
an energy storage system (20);
an electric power unit (30);
a passenger compartment (40); and
the thermal management system (10) according to any of claims 1-17

19. A method of regulating a temperature of one or more temperature regulation location (20, 30, 40) on a vehicle (300), the method comprising:
providing the thermal management system (10) according to any of claims 1-17; and
operating the controller (50) to convert one or more of the first temperature regulation circuit (100) to a first temperature regulation sub-circuit and the second temperature regulation circuit (200) to a second temperature regulation sub-circuit to direct the flow of one or more of the first working fluid through the first temperature regulation circuit and the second working fluid through the second temperature regulation circuit.

20. The method of claim 19, wherein one or more of the first temperature regulation sub-circuit and the second temperature regulation sub-circuit correspond to one or more mode of operation of the thermal management system (10).
